# EUROPÄISCHE PATENTANMELDUNG

(11) **EP 1 722 114 A2**
(43) Veröffentlichungstag der Anmeldung: **15.11.2006**
(21) Anmeldenummer: 06450072.1
(22) Anmeldetag: 10.05.2006
(51) Int. Cl.: F16C 7/02

(54) **Hochrobuste, leichtgewichtige Pleuelstange**

(30) Priorität: 11.05.2005 AT 8082005
(71) Anmelder: O. St. Feingussgesellschaft m. b. H., 8605 Kapfenberg (AT)
(72) Erfinder: Pankl, Gerold, Ing., 8600 Bruck a.d. Mur (AT)
(74) Vertreter: Wirnsberger, Gernot

(57) **Zusammenfassung**

Die Erfindung betrifft eine Pleuelstange (1) für Rennsportmotoren mit einem oberen Pleuelauge (2) und einem unteren Pleuelauge (3) und einem hohlen Schaft (6), welcher sich von einem Lagerbereich (4) des oberen Pleuelauges (2) zu einem Lagerbereich (5) des unteren Pleuelauges (3) erstreckt. Um eine Pleuelstange dieser Art zu schaffen, welche leichtgewichtig mit dünnen Wänden im Schaftbereich ausbildbar ist und dennoch hohen Beanspruchungen standhält ist erfindungsgemäß vorgeschlagen, dass zumindest eine Verstrebung (7) vorgesehen ist, welche vom Schaft (6) zum Lagerbereich (5) des unteren Pleuelauges (3) verläuft.

## Beschreibung

Die Erfindung betrifft eine Pleuelstange für Rennsportmotoren mit einem oberen Pleuelauge und einem unteren Pleuelauge und einem hohlen Schaft, welcher sich von einem Lagerbereich des oberen Pleuelauges zu einem Lagerbereich des unteren Pleuelauges erstreckt.

Pleuelstangen sind im Betrieb hohen Zug-Druck-Wechselbeanspruchungen ausgesetzt, denen sich Biegespannungen und Torsionsbeanspruchungen überlagern. Jede einzelne dieser verschiedenartigen Beanspruchungen kann über den Querschnitt und die Länge einer Pleuelstange beträchtlich varüeren. Zudem ändern sich die genannten Beanspruchungen beim Einsatz je nach Position der Pleuelstange und sind daher zeitlich variabel, weshalb sich insgesamt ein komplexes Beanspruchungsprofil ergibt, welchem eine Pleuelstange im Einsatz standhalten soll.

Bei Pleuelstangen für Hochleistungsanwendungen besteht neben dem Kriterium nach einer hohen Standfestigkeit und damit verbunden langer Gebrauchsdauer ein zusätzliches Kriterium darin, Pleuelstangen leichtgewichtig auszubilden, um beim Betrieb möglichst hohe Motordrehzahlen erreichen zu können.

Für eine aus Vollmaterial erstellte, beispielsweise geschmiedete, Pleuelstange besteht eine Möglichkeit zur Gewichtsreduktion darin, in wenig beanspruchten Bereichen der Pleuelstange von deren Oberfläche mittels Fräsens Material abzutragen. Ein nachträgliches Fräsen zum Zwecke einer Gewichtsreduktion einer Pleuelstange erfordert allerdings nicht nur einen zusätzlichen Arbeitsschritt bei deren Herstellung, sondern bringt überdies Abfall von hochwertigem Material mit sich. Auch ist die Zugänglichkeit der Oberfläche einer Pleuelstange für einen Fräser und damit auch die Möglichkeit, spanabhebend Material abzunehmen, eingeschränkt. Man ist daher dazu übergegangen, Pleuelstangen mit einem hohlen Schaft zu fertigen und in dieser Weise das Gewicht einer Pleuelstange zu verringern.

So ist aus der EP 0 411 763 A2 eine im Feinguss erstellte Pleuelstange bekannt, deren zylindrisch und parallel zu einer Pleuelachse verlaufender Schaft im Wesentlichen hohl ausgebildet ist. Gemäß dieser Druckschrift ist es möglich, Pleuelstangen herzustellen, deren Wandstärke im Schaftbereich 0.5 bis 0.75 mm beträgt.

Nach der DE 197 53 358 A1, in welcher eine weitere Pleuelstange mit hohlem Schaft beschrieben ist, soll eine feingegossene Pleuelstange gemäß EP 0 411 763 A2 aufgrund ihres Gewichtes nicht für Hochleistungskolbenmotoren geeignet sein. In der DE 197 53 358 A1 wird daher vorgeschlagen, Pleuelstangen mit hohlem Schaft herzustellen, indem zwei dünnwandige, aus einer Titanlegierung bestehende Profilhälften unter Bildung eines geschlossenen Hohlraums entlang einer im Wesentlichen in Längsrichtung der Pleuelstange verlaufenden Verbindungsnaht miteinander verbunden sind. Derartige Pleuelstangen sollen auch für Hochleistungskolbenmotoren geeignet sein.

Pleuelstangen mit hohlem Schaft entsprechend dem vorstehend dargestellten Stand der Technik sind an sich leichtgewichtig herstellbar. Einer leichtgewichtigen Bauweise gemäß dem Stand der Technik sind aber insofern Grenzen gesetzt, als dass die Wand des Schaftes jedenfalls dick genug sein muss, um den verschiedenen Beanspruchungen beim Betrieb standzuhalten. Dies stellt insbesondere bei Pleuelstangen für Rennsportmotoren, welche höchsten Beanspruchungen ausgesetzt sind, eine erhebliche Einschränkung dar: Je höher die Beanspruchungen, desto stärkere Wände sind erforderlich. Ein höheres Gewicht einer Pleuelstange wirkt sich aber nachteilig bezüglich einer maximal erreichbaren Motorendrehzahl aus, die gerade bei Rennsportmotoren hoch sein soll. Es besteht also quasi ein Dilemma, da einerseits mit Rennsportmotoren höchste Umdrehungszahlen erreicht werden sollen, was unter anderem möglichst leichte Pleuelstangen erfordert, andererseits aber genau bei diesen Anwendungen so hohe Beanspruchungen auftreten, dass Pleuelstangen mit entsprechend hoher Wandstärke im Schaftbereich erforderlich sind.

Die Erfindung setzt sich nun ausgehend vom Stand der Technik das Ziel, eine Pleuelstange der eingangs genannten Art anzugeben, welche leichtgewichtig mit dünnen Wänden im Schaftbereich ausbildbar ist und dennoch hohen Beanspruchungen standhält.

Diese Aufgabe löst eine Pleuelstange nach Anspruch 1. Vorteilhafte Weiterbildungen einer erfindungsgemäßen Pleuelstange sind Gegenstand der abhängigen Ansprüche 2 bis 14.

Die mit der Erfindung erzielten Vorteile sind insbesondere darin zu sehen, dass mit Hilfe der vorgesehenen zumindest einen Verstrebung, welche vom Schaft zum Lagerbereich des unteren Pleuelauges verläuft, beim Einsatz der Pleuelstange angreifende Kräfte in günstiger Weise aufgeteilt bzw. verteilt werden. Wie bekannt, wird eine Pleuelstange beim Einsatz über einen mit dem oberen Pleuelauge in Verbindung stehenden Kolbenbolzen und einer mit dem unteren Pleuelauge in Verbindung stehenden Kurbelwelle je nach ihrer Position auf Zug und/oder Druck beansprucht. Während bislang die entsprechenden Kräfte im Gesamten vom hohlen Schaft aufgenommen werden mussten, ist gemäß der Erfindung nun eine Aufteilung der Kräfte gegeben, weil ein Teil der Kräfte über die vorgesehene Verstrebung vom Schaft zum Lagerbereich des unteren Pleuelauges geleitet wird. Dadurch ist eine im Schaftbereich wirkende Kraft geringer als bei Pleuelstangen gemäß dem Stand der Technik. Dies hat zweierlei Konsequenzen: Erstens kann eine erfindungsgemäße Pleuelstange, wenn sie gleichen Beanspruchungen wie herkömmliche Pleuelstangen standhalten soll, mit vergleichsweise geringerem Gewicht ausbildet sein, da die Wände des Schaftes dünner als bisher gefertigt sein können und eine damit verbundene Materialersparnis größer ist, als einzusätzlicher Materialaufwand für die zumindest eine Verstrebung. Zweitens kann, wenn ein Maximalgewicht der Pleuelstange als fixe Größe vorgegebenen ist, diese nunmehr höher beansprucht werden, da eine Verteilung des Kraftflusses in der Pleuelstange optimiert ist.

Aus anderem Blickwinkel betrachtet kann gesagt werden, dass im Rahmen der Erfindung erstmals erkannt wurde, dass die vorhin aufgezeigten Grenzen des Standes der Technik überwindbar sind, wenn für die Herstellung einer Pleuelstange möglichst wenig Material verwendet und dieses innerhalb des Volumens der Pleuelstange so verteilt wird, dass bei Beanspruchung ein optimaler Kraftflüss in der Pleuelstange möglich ist.

Bevorzugt ist es, wenn der Schaft mit zumindest einer Verstrebung ausgebildet ist, welche vom Schaft zum Lagerbereich des oberen Pleuelauges verläuft. In diesem Fall ist beispielsweise ein Kraftfluss vom Lagerbereich des oberen Pleuel auges bis zum Lagerbereich des unteren Pleuelauges und umgekehrt möglich, was sich in Bezug auf eine hohe Beanspruchbarkeit der Pleuelstange bei wechselnden Zug- als Druckbeanspruchungen als günstig erweist.

Die zumindest eine Verstrebung kann grundsätzlich von einer äußeren Oberfläche des Schaftes zu einem Lagerbereich verlaufen. Bevorzugt ist es jedoch, wenn die Verstrebung(en) im Hohlraum der Pleuelstange angeordnet ist (sind), weil im Hohlraum verlaufende Verstrebungen vor äußeren Einwirkungen geschützt sind. Auch ist dann ein Materialaufwand für eine oder mehrere Verstrebungen geringer, weil im Inneren der Pleuelstange kürzere Strecken zu überbrücken sind, als an deren Außenseite.

Ganz besonders bevorzugt ist es, um einwirkende Kräfte möglichst gut zu verteilen, wenn mehrere vom Schaft zum Lagerbereich des unteren Pleuelauges und/oder mehrere vom Schaft zum Lagerbereich des oberen Pleuelauges verlaufende Verstrebungen vorgesehen sind, weil dadurch eine gleichmäßige Verteilung bzw. Ableitung von Kräften auf die großflächigen Lagerbereiche möglich ist. Dies wirkt hohen punktuellen Spitzenbelastungen aufgrund von Zug- und Druckkräften effektvoll entgegen.

Weiter ist es von Vorteil, um eine möglichst gleichmäßige Verteilung von Kräften über einen Querschnitt der Pleuelstange normal zu deren Längsachse zu erreichen, wenn die zum Lagerbereich des unteren Pleuelauges verlaufenden Verstrebungen rotationssymmetrisch zu einer Pleuelstangenachse ausgebildet sind und/oder die zum Lagerbereich des oberen Pleuelauges verlaufenden Verstrebungen rotationssymmetrisch zu einer Pleuelstangenachse ausgebildet sind.

Es wirkt sich auch günstig aus, wenn die Verstrebung bzw. die Verstrebungen als Stege mit zum Schaft und/oder zum Lagerbereich hin verbreitertem Ende ausgebildet ist bzw. sind. Durchein verbreitertes Ende wird eine Belastung der Verstrebungen in den Übergangsbereichen Schaft/Verstrebung und LagerbereichNerstrebung gering gehalten. Andererseits kann die Verstrebung bzw. können die Verstrebungen in den beanspruchungsarmen Bereichen als Steg(e) materialsparend ausgeführt sein.

In Bezug auf einen möglichst effizienten Kraftfluss in der Pleuelstange ist es bevorzugt, wenn die Verstrebung bzw. Verstrebungen bei Betrachtung vom schaftseitigen Ende der Verstrebung(en) zur Pleuelstangenachse hin gerichtet ist bzw. sind.

In einer hochbeanspruchbaren und dennoch leichtgewichtigen Variante der Erfindung ist der Schaft in einem Schnitt quer zur Pleuelstangenachse im Wesentlichen elliptisch ausgebildet.

Um Kräfte zwischen dem kleineren, oberen Pleuelauge und dem größeren, unteren Pleuelauge bzw. den entsprechenden Lagerbereichen möglichst ohne Auftreten von Zug- bzw. Druckspitzen zu verteilen, kann der Schaft in Richtung vom oberen Pleuelauge zum unteren Pleuelauge mit einem zunehmenden Durchmesser ausgebildet sein. Da die Zug- und Druckspannungsmaxima mit zunehmendem Durchmesser abnehmen, kann im Zusammenhang damit vorgesehen sein, dass der Schaft in Richtung vom oberen Pleuelauge zum unteren Pleuelauge mit einer abnehmenden Wandstärke ausgebildet ist, was in Bezug auf ein geringes Gesamtgewicht der Pleuelstange von Vorteil ist.

Eine erfindungsgemäße Pleuelstange kann an sich in beliebiger Weise hergestellt werden. Um jedoch Pleuelstangen mit besonders dünnen Wänden herstellen zu können und dabei sogleich die Verstrebungen an der Pleuelstange hochpräzise anbringen zu können, ist es von Vorteil, wenn die Pleuelstange feingegossen ist bzw. im Feinguss herstellt ist.

Im Kontext mit einer Herstellung im Feinguss hat es sich als Vorteil erwiesen, wenn der Schaft im Randbereich einer Kernmarkenöffnung verstärkt ausgebildet ist. Zwar ist hierfür auf der einen Seite zusätzliches Material vorzusehen, allerdings wird die Kernmarke dadurch stabilisiert, so dass diese auf der anderen Seite mit großem Durchmesser gestaltet werden kann. Insgesamt kann daher eine Materialersparnis erreicht werden, ohne dass eine Beanspruchbarkeit der Pleuelstange leidet. Dabei kann zusätzlich vorgesehen sein, dass der verstärkt ausgebildete Randbereich mit dem Lagerbereich des unteren Pleuelauges und/oder dem Lagerbereich des oberen Pleuel auges über einen Verstärkungssteg in Verbindung steht, so dass über den verstärkt ausgebildeten Randbereich auch Kräfte vom Lagerbereich des oberen Pleuelauges zum Lagerbereich des unteren Pleuelauges geleitet werden können.

In einer Ausgestaltung ist die erfindungsgemäße Pleuelstange aus zwei Teilen gebildet, deren Verbindungsfläche das untere Pleuelauge in zwei gleiche größen- bzw. volumengleiche Bereiche teilt. Diese Ausgestaltung erlaubt eine einfache Befestigung derselben an einer Kurbelwelle. Im Hinblick auf ein geringes Gesamtgewicht der Pleuelstange ist es dabei bevorzugt, wenn beide Teile mit einem Hohlraum ausgeführt sind.
Weitere Vorteile der Erfindung ergeben sich aus dem Zusammenhang der Beschreibung und dem Ausführungsbeispiel.

Im Folgenden ist die Erfindung anhand eines Ausführungsbeispieles noch weitergehend beschrieben.
Dabei zeigen:
Figur 1: Den Querschnitt eines oberen Teiles einer aus zwei Teilen bestehenden Pleuelstange;
Figur 2: Den Querschnitt einer Pleuelstange in der Ebene II-II nach Figur 1;
Figur 3: Den Querschnitt einer Pleuelstange in der Ebene III-III nach Figur 1;
Figur 4: Den unteren Teil einer aus zwei Teilen bestehenden Pleuelstange, welcher mit einem oberen Teil gemäß Figur 1 korreliert; und
Figur 5: Den Querschnitt einer Pleuelstange in der Ebene V-V nach Figur 4.

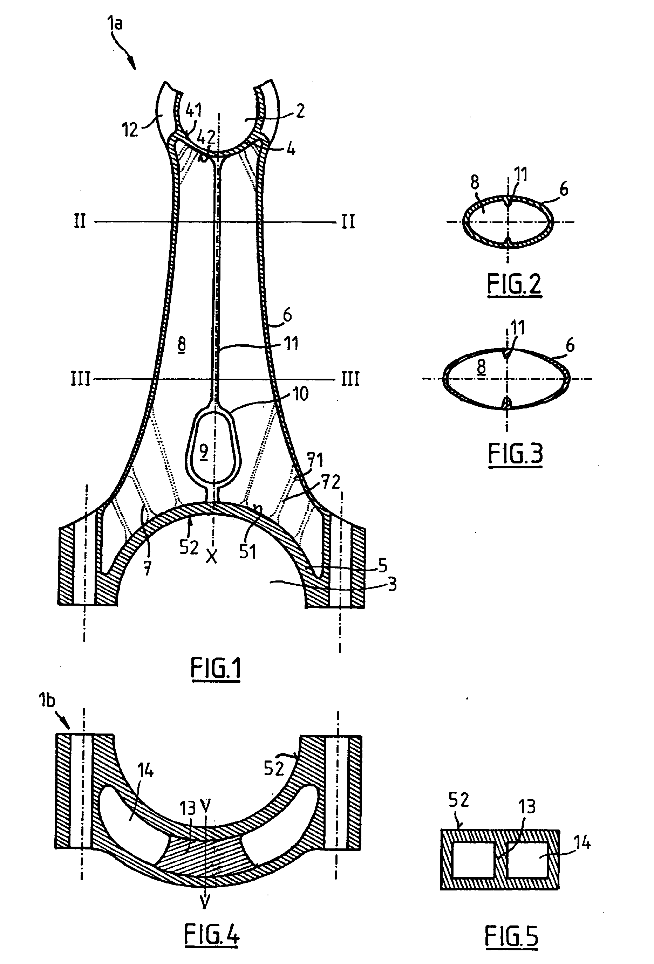

In Figur 1 ist das obere Teil **1a** einer zweiteiligen erfindungsgemäßen Pleuelstange mit hohlem Schaft dargestellt, welche im Feinguss hergestellt wurde. Das obere Teil **1a** weist an einem Ende seiner Längserstreckung ein nicht vollständig gezeigtes, kreisförmiges oberes Pleuelauge **2** auf, welches einen Kolbenbolzen aufnehmen kann und von einem Lagerbereich **4** umgeben ist bzw. durch dessen innere Oberfläche **41** definiert wird. Am gegenüberliegenden Ende des Teils **1a** befindet sich eine Hälfte eines ebenfalls kreisförmigen, unteren Pleuelauges **3,** dessen Durchmesser größer ist, als jener des oberen Pleuelauges **2.** Das untere Pleuelauge **3** ist von einem Lagerbereich 5 umgeben, dessen Oberfläche **52** im Einsatz an einer Kurbelwelle anliegt.

Der Lagerbereich **4** des oberen Pleuelauges **2** und der Lagerbereich **5** des unteren Pleuelauges **3** sind durch einen Schaft **6** verbunden, welcher einen Hohlraum **8** aufweist. Entsprechend dem größeren Durchmesser des unteren Pleuelauges **3** ist der Schaft **6** in Richtung vom oberen Pleuelauge **2** zum unteren Pleuelauge **3** verbreitend bzw. auseinander laufend ausgebildet, um eine gleichmäßige Kraftverteilung zu erreichen. Damit in Zusammenhang stehend ist eine Vielzahl von Verstrebungen **7** vorgesehen, welche sich vom Schaft **6** zum Lagerbereich **5** des unteren Pleuelauges **3** bzw. vom Schaft **6** zum Lagerbereich **4** des oberen Pleuelauges **2** erstrecken. Die Verstrebungen **7** verlaufen vom Schaft **6** aus betrachtet jeweils in Richtung zur Pleuelstangenachse **X,** welche durch die Mittelpunkte der Kreise des oberen Pleuelauges **2** und des unteren Pleuelauges **3** definiert wird, hin und sind symmetrisch um diese herum angeordnet. Dies bewirkt bei wechselnder Zug- und/oder Druckbeanspruchung der Pleuelstange einen optimalen Kraftfluss vom Lagerbereich **5** des unteren Pleuelauges **3** zum Lagerbereich **4** des oberen Pleuelauges **2** bzw. umgekehrt.

Die Verstrebungen **7** sind als Stege **72** ausgebildet, welche in Bereichen, die an den Schaft **6** bzw. die Lagerbereiche **4, 5** angrenzen mit einer Verbreiterung **71** ausgebildet sind. Dies trägt positiv zu einer guten Ableitung von Kräften aus einem Schaftbereich hin zu den Lagerflächen **4, 5** bei.
In Bezug auf Materialien und konstruktive Aspekte können Verstrebungen **7** grundsätzlich aus verschiedenen Materialien gefertigt sein, beispielsweise in Form von Stahlrohren oder faserverstärkten Leichtmetallstangen und es können zusätzliche Verstrebungen quer zur Pleuellängsachse **X,** von Wand zu Wand, vorgesehen sein, was zusätzliche Vorteile in Bezug auf Biege- und Torsionsbeanspruchungen bringt.

Besonders einfach gestaltet sich eine Herstellung einer erfindungsgemäßen Pleuelstange, wenn diese im Feinguss hergestellt wird, da in diesem Fall die hohle Pleuelstange und die Verstrebungen in einem einzigen Herstellungsschritt erstellt werden. Daneben, und noch wichtiger, wird die Pleuelstange aus einem einzigen Material erstellt, was eine mechanisch dauerhaft haltbare Verbindung bzw. Anbindung der Verstrebungen **7** am Schaft **6** und den dem Hohlraum **8** zuwendeten Lagerflächen **42** und **51** bringt. Insbesondere können die Verstrebungen **7** an der inneren, den Hohlraum **8** einschließenden Oberfläche des Schaftes **6** anliegen, anstatt frei stehend durch den Hohlraum **8** zu verlaufen. Zudem lässt sich durch eine Herstellung im Feinguss eine Wandstärke des Schaftes **6,** wie auch übriger Teile einer Pleuelstange, exakt einstellen, so dass eine materialsparende Fertigung möglich ist, was sich wiederum im Hinblick auf maximale Drehmomente vorteilhaft auswirkt. Wie zum Beispiel anhand der Figuren 2 und 3 demonstriert, ist der Schaft **6** einer feingegossene Pleuelstange mit umso geringerer Wandstärke gefertigt, je größer der freie Durchmesser des Schaftes **6** ist. Dabei erweist sich eine Gestaltung der Wandstärke in der Weise, dass die Wand im Querschnitt für sich betrachtet immer im Wesentlichen die gleiche Fläche aufweist, als vorteilhaft in Bezug auf eine Materialoptimierung. Anders ausgedrückt, es ist bei Beanspruchung in jeder Lage quer zur Pleuelstange das Verhältnis Kraft/Fläche konstant und kann in Bezug auf eine zu erwartende Maximalbeanspruchung die Wand des Schaftes **6** an jeder Position genau auf diese ausgelegt werden. Innerhalb einer Querschnittsfläche kann Material ungleichmäßig verteilt sein bzw. eine Wandstärke je nach zu bewältigender Beanspruchung variieren, wie aus Figur 3 ersichtlich.

Mit Blick auf Figur 1 ist noch erwähnt, dass eine Kernmarkenöffnung **9,** welche bei einem Feinguss erforderlich ist, mit einem verstärkten Randbereich **10** ausgebildet ist. Dadurch ist es möglich, die Kernmarkenöffnung **9** mit einer für Herstellungszwecke vorteilhaften Größe auszubilden, ohne dass eine für spätere Einsatzzwecke nachteilige Schwachstelle entsteht. Gleichzeitig ist der verstärkte Randbereich **10** über Verstärkungsstege **11** mit dem Lagerbereich **5** des unteren Pleuelauges **3** und dem Lagerbereich **4** des oberen Pleuelauges verbunden und daher aktiv in die Steuerung des Kraftflusses eingebunden.

Bei einer Herstellung einer erfindungsgemäßen Pleuelstange im Feinguss kann diese mit weiteren Komponenten ausgestattet bzw. weiter in Bezug auf eine Gewichtsminimierung ausgestaltet werden. So ist es von Vorteil, wenn während der Erstellung mittels Feingussverfahrens im Hohlraum **8** zusätzlich ein Rohr vorgesehen wird, welches unteres Pleuelauge **3** und oberes Pleuelauge **2** verbindet, so dass Öl zwischen den Pleuelaugen fließen und die Pleuelstange geölt bzw. geschmiert werden kann. Es ist auch möglich und zweckmäßig, weitere Teilvolumina der erfindungsgemäßen Pleuelstange hohl auszugestalten, beispielsweise einen an den Lagerbereich **4** des oberen Pleuelauges **2** angrenzenden Bereich **12.**

Ein unterer Teil **1b** einer Pleuelstange ist in Figur 4 dargestellt. Dieser Teil **1b** korrespondiert zum Teil **1a** der Figur 1 und bildet mit diesem zusammen eine Pleuelstange. Wie der Teil **1a** ist auch der Teil **1b** mit einem Hohlraum **14** ausgebildet, um ein Gesamtgewicht der Pleuelstange gering zu halten. Im Hohlraum **14** ist, wie auch aus Figur 5 ersichtlich, eine Strebe **13** angebracht, welche ähnlich den Verstrebungen **7** im Hohlraum **8** des Schaftes **6** für eine hohe mechanische Belastbarkeit trotz geringem Gewicht sorgt.

## Patentansprüche

1. Pleuelstange (1) für Rennsportmotoren mit einem oberen Pleuelauge (2) und einem unteren Pleuelauge (3) und einem hohlen Schaft (6), welcher sich von einem Lagerbereich (4) des oberen Pleuelauges (2) zu einem Lagerbereich (5) des unteren Pleuelauges (3) erstreckt, **dadurch gekennzeichnet, dass** zumindest eine Verstrebung (7) vorgesehen ist, welche vom Schaft (6) zum Lagerbereich (5) des unteren Pleuelauges (3) verläuft.

2. Pleuelstange (1) nach Anspruch 1, **dadurch gekennzeichnet, dass** der Schaft (6) mit zumindest einer Verstrebung (7) ausgebildet ist, welche vom Schaft (6) zum Lagerbereich (4) des oberen Pleuelauges (2) verläuft.

3. Pleuelstange (1) nach Anspruch 1 oder 2, **dadurch gekennzeichnet, dass** die Verstrebung(en) (7) im Hohlraum (8) der Pleuelstange (1) angeordnet ist (sind).

4. Pleuelstange (1) nach einem der Ansprüche 1 bis 3, **dadurch gekennzeichnet, dass** mehrere vom Schaft (6) zum Lagerbereich (5) des unteren Pleuelauges (3) und/oder mehrere vom Schaft (6) zum Lagerbereich (4) des oberen Pleuelauges (2) verlaufende Verstrebungen (7) vorgesehen sind.

5. Pleuelstange (1) nach einem der Ansprüche 1 bis 4, **dadurch gekennzeichnet, dass** die zum Lagerbereich (5) des unteren Pleuelauges (3) verlaufenden Verstrebungen (7) rotationssymmetrisch zu einer Pleuelstangenachse (X) ausgebildet sind und/oder die zum Lagerbereich (4) des oberen Pleuelauges (2) verlaufenden Verstrebungen (7) rotationssymmetrisch zu einer Pleuelstangenachse (X) ausgebildet sind.

6. Pleuelstange (1) nach einem der Ansprüche 1 bis 5, **dadurch gekennzeichnet, dass** die Verstrebung bzw. die Verstrebungen (7) als Stege (71) mit zum Schaft (6) und/oder zum Lagerbereich (4, 5) hin verbreitertem Ende (72) ausgebildet ist bzw. sind.

7. Pleuelstange (1) nach einem der Ansprüche 1 bis 6, **dadurch gekennzeichnet, dass** die Verstrebung bzw. Verstrebungen (7) bei Betrachtung vom schaftseitigen Ende der Verstrebung(en) (7) zur Pleuelstangenachse (X) hin gerichtet ist bzw. sind.

8. Pleuelstange (1) nach einem der Ansprüche 1 bis 7, **dadurch gekennzeichnet, dass** der Schaft (6) in einem Schnitt quer zur Pleuelstangenachse (X) im Wesentlichen elliptisch ausgebildet ist.

9. Pleuelstange (1) nach einem der Ansprüche 1 bis 8, **dadurch gekennzeichnet, dass** der Schaft (6) in Richtung vom oberen Pleuelauge (2) zum unteren Pleuelauge (3) mit einem zunehmenden Durchmesser ausgebildet ist.

10. Pleuelstange (1) nach Anspruch 9, **dadurch gekennzeichnet, dass** der Schaft (6) in Richtung vom oberen Pleuelauge (2) zum unteren Pleuelauge (3) mit einer abnehmenden Wandstärke ausgebildet ist.

11. Pleuelstange (1) nach einem der Ansprüche 1 bis 10, **dadurch gekennzeichnet, dass** die Pleuelstange (1) feingegossen ist.

12. Pleuelstange (1) nach Anspruch 11, **dadurch gekennzeichnet, dass** der Schaft (6) im Randbereich (10) einer Kernmarkenöffnung (9) verstärkt ausgebildet ist.

13. Pleuelstange (1) nach Anspruch 12, **dadurch gekennzeichnet, dass** der verstärkt ausgebildete Randbereich (10) mit dem Lagerbereich (5) des unteren Pleuelauges (3) und/oder dem Lagerbereich (4) des oberen Pleuelauges (2) über einen Verstärkungssteg (11) in Verbindung steht.

14. Pleuelstange (1) nach einem der Ansprüche 1 bis 13, **dadurch gekennzeichnet, dass** die Pleuelstange (1) aus zwei Teilen (1a, 1 b) gebildet ist, deren Verbindungsfläche das untere Pleuelauge (3) in zwei gleiche größen- bzw. volumengleiche Bereiche teilt.

15. Pleuelstange (1) nach Anspruch 14, **dadurch gekennzeichnet, dass** beide Teile (1a, 1 b) mit jeweils zumindest einem Hohlraum (8, 14) ausgeführt sind.
